# EUROPEAN PATENT APPLICATION

(11) **EP 1 675 116 A2**
(43) Date of publication of application: **28.06.2006**
(21) Application number: 05112005.3
(22) Date of filing: 13.12.2005
(51) Int. Cl.: G11B 19/12

(54) **Optical disk device and method for controlling the same**

(30) Priority: 22.12.2004 JP 2004372080
(71) Applicant: KABUSHIKI KAISHA TOSHIBA, Tokyo 105-8001 (JP)
(72) Inventor: Mori, Takayuki, 105-8001, Tokyo (JP)
(74) Representative: Henkel, Feiler & Hänzel

(57) **Abstract**

An optical pickup (13) capable of selectively emitting blue light based and red light based laser beams is moved to a radial direction of an optical disk (11) while emitting either of the laser beams, and it is detected whether or not a track pitch of the optical disk (11) has changed based on a signal (TE) obtained from the optical pickup (13). In the case where a change in the track pitch of the optical disk (11) has been detected, the blue light based laser beam is emitted from the optical pickup (13). In the case where a change in the track pitch of the optical disk (11) is not detected, the red light based laser beam is emitted from the optical pickup (13).

## Description

The present invention relates to an optical disk device and a method for controlling the disk device for carrying out recording or reproduction with respect to an optical disk. More particularly, the present invention relates to an optical disk device which automatically judges a type of an optical disk mounted thereon.

As is well known, an optical disk is roughly divided into a high definition digital versatile disk (HD DVD), a DVD, and a compact disk (CD) depending on its capacity. In the respective optical disks, a variety of types of reproduction only disk, a rewritable type disk, and write-once type disk are prepared according to their use. The respective optical disks are different from each other in physical structure characteristics such as laser beam (wavelength) to be used, disk rotation frequency, and reproduction signal processing system.

On the other hand, there is a request for an optical disk device enabling reproduction with respect to a variety of optical disks. Currently, when an optical disk is mounted, identification information recorded in a lead-in region which exists at its inner periphery side is read; judgment of the optical disk is carried out; and type of the optical disk is reliably identified so that a proper laser beam, a disk rotation frequency, and a reproduction processing system or the like are selected.

In addition, a current optical disk device measures a reflection index or a focal depth of the mounted optical disk in order to reduce a time from a time at which the optical disk is mounted to a time at which reproduction is carried out; simply carries out judgment of the optical disk by using this measurement result; and selects a proper laser beam or optical disk rotation frequency by using this simple judgment result. Then, this device reads the identification information written in the lead-in region and acquires a final identification result.

However, in a technique of judging the optical disk using a reflection index, there occurs a problem that good judgment precision cannot be obtained because an incorrect judgment caused by a solid difference of the optical disk frequently occurs. In addition, in the case where judgment of the optical disk due to the focal depth has been carried out, there occurs an inconvenience that judgment cannot be made because a distance from a surface to a recording layer is equal to another in an HD DVD and a DVD.

In Jpn. Pat. Appln. KOKAI Publication No. 2002-67676, there is disclosed a configuration in which track pitches in a lead-in region and a data region of an optical disk are measured, respectively, and both of them are compared with each other, thereby judging whether the optical disk is CD-R (recordable) or CD-RW (rewritable), or alternatively, a general CD-ROM (read only memory).

The present invention has been made in view of the foregoing problem. It is an object of the present invention to provide an optical disk device and a method for controlling the disk device which enables precise judgment of an optical disk using a blue light based laser beam and an optical disk using a red light based laser beam with a simple configuration.

According to one aspect of the present invention, there is provided an optical disk device comprising: an optical pickup configured to read recording information from an optical disk and selectively emit a blue light based laser beam and a red light based laser beam; a moving section configured to emit any one of the laser beams from the optical pickup and move the optical pickup to a radial direction of the optical disk; a detector section configured to detect whether or not a track pitch of the optical disk has changed based on a signal obtained from the optical pickup when the optical pickup is moved in the radial direction of the optical disk by the moving section; and a control section configured to emit a blue light based laser beam from the optical pickup in the case where a change of the track pitch of the optical disk is detected by the detector section and emit a red light based laser beam from the optical pickup in the case where a change of the track pitch of the optical disk is not detected by the detector section.

According to another aspect of the present invention, there is provided an optical disk device control method for controlling an optical disk device comprising an optical pickup configured to read recording information from an optical disk and selectively emit a blue light based laser beam and a red light based laser beam, the method comprising: a first step of emitting either of the laser beams from the optical pickup and moving the optical pickup in a radial direction of the optical disk; a second step of detecting whether or not a track pitch of the optical disk has changed based on a signal obtained from the optical pickup when the optical pickup is moved in the radial direction of the optical disk in accordance with the first step; and a third step of emitting a blue light based laser beam from the optical pickup in the case where a change in the track pitch of the optical disk has been detected in the second step and emitting a red light based laser beam from the optical pickup in the case where the change in the track pitch of the optical disk is not detected in the second step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view adopted to explain a difference between a recording region of an HD DVD-ROM and a recording region of a DVD-ROM;
FIG. 2 is a view adopted to comparatively explain a track pitch of an HD DVD and a track pitch of a DVD;
FIG. 3 is a block diagram depicting an embodiment of the present invention, the block diagram being adopted to explain an optical disk device;
FIG. 4 is a flow chart adopted to explain a main processing operation of the optical disk device in accordance with the same embodiment;
FIGS. 5 and 6 are views each adopted to explain a relative movement speed of an optical pickup at the time of a seek operation for an HD DVD of the optical disk device in accordance with the same embodiment;
FIGS. 7 and 8 are views each adopted to explain a relative movement speed of an optical pickup at the time of a seek operation for a DVD of the optical disk device in accordance with the same embodiment;
FIG. 9 is a view adopted to comparatively explain a relative movement speed and an absolute movement speed of the optical pickup at the time of a seek operation for the HD DVD of the optical disk device in accordance with the same embodiment;
FIG. 10 is a view adopted to comparatively explain a relative movement speed and an absolute movement speed of the optical pickup at the time of a seek operation for the DVD of the optical disk device in accordance with the same embodiment;
FIG. 11 is a view adopted to comparatively explain a data region of the HD DVD and a data region of the DVD;
FIG. 12 is a flow chart adopted to explain part of the main processing operation considering a movement position of the optical pickup of the optical disk device in accordance with the same embodiment;
FIG. 13 is a flow chart adopted to explain the remaining part of the main processing operation considering a movement position of the optical pickup of the optical disk device in accordance with the same embodiment;
FIG. 14 is a view adopted to explain an operation state of each section of the optical disk device in accordance with the same embodiment; and
FIG. 15 is a view adopted to explain another embodiment of the present invention.

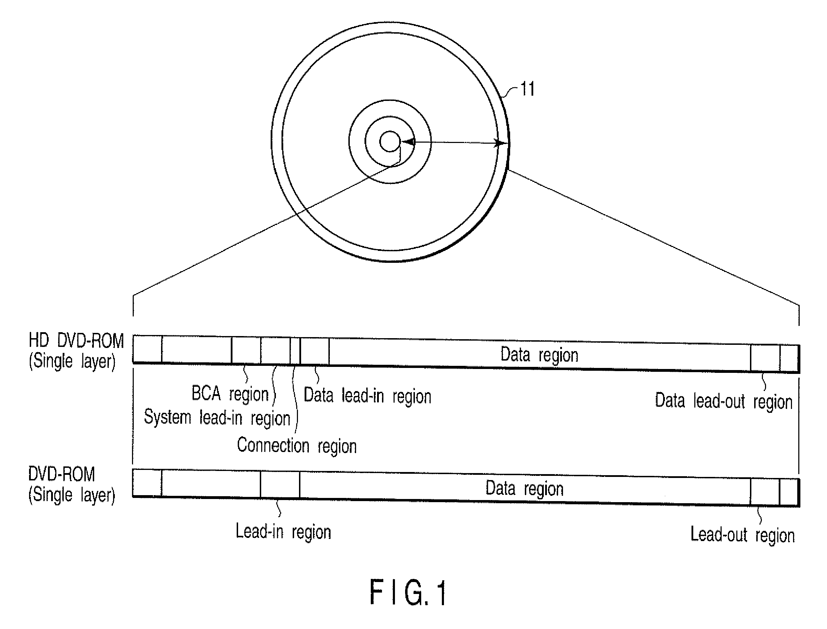

Hereinafter, an embodiment of the present invention will be described with reference to the accompanying drawings. FIG. 1 shows a difference in recording regions between an HD DVD-ROM and a DVD-ROM by example of the HD DVD-ROM which carries out reproduction by using a blue light based laser beam and a DVD-ROM which carries out reproduction by using a red light laser beam as an optical disk 11.

That is, in the HD DVD-ROM, from its inner periphery side to its outer periphery side, there are formed: a BCA region; a system lead-in region in which identification information is written; a connection region; a data lead-in region in which data information is written; a data region in which data is written; and a data lead-out region indicating the end of data.

In contrast, in the DVD-ROM, from its inner periphery side to its outer periphery side, there are formed: a lead-in region in which identification information is written; a data region in which data is written; and a lead-out region indicating the end of data.

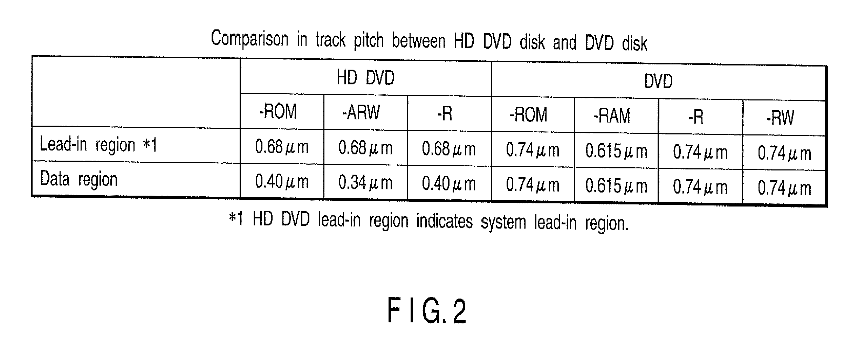

FIG. 2 comparatively shows a track pitch of the HD DVD and a track pitch of the DVD. The HD DVD-ROM has a pit train of track pitches in which its system lead-in region is 0.68 µm and its data region is 0.40 µm. In addition, the data lead-in region and data lead-out region in the HD DVD have the same track pitch as that of the data region.

On the other hand, the DVD-ROM has a pit train of track pitches in which its lead-in region is 0.74 µm and its data region is also 0.74 µm.

That is, the HD DVD has different track pitches between its system lead-in region and its data region. Thus, in the case where different track pitches have been detected in its system lead-in region and its data region, it is possible to judge that the detected disk is an HD DVD.

Conversely, the DVD has the same track pitches in its lead-in region and its data region. Thus, in the case where there is no change in track pitches between its lead-in region and its data region, it is possible to judge that the detected disk is a DVD.

However, when an optical disk 11 is rotated by using a spindle motor, eccentricity occurs due to a displacement between a center of the optical disk 11 and a rotary shaft of the spindle motor, making it difficult to precisely measure a track pitch.

In the present embodiment, by a seek operation, a relative movement speed of an optical pickup relative to the optical disk 11 is detected from a gap at which a tracking error signal is generated, and the presence or absence of a change in its relative movement speed is judged, thereby judging that a different track pitch has been detected.

In this way, the optical disk 11 can be judged by detecting a relative movement speed, and thus, judgment can be made by using a single light source. As a light source, a blue light based laser beam or a red light based laser beam can be used. However, a case where the red light based laser beam is used is limited to a case in which a tracking error signal with respect to the HD DVD can obtain an amplitude which conforms to a standard.

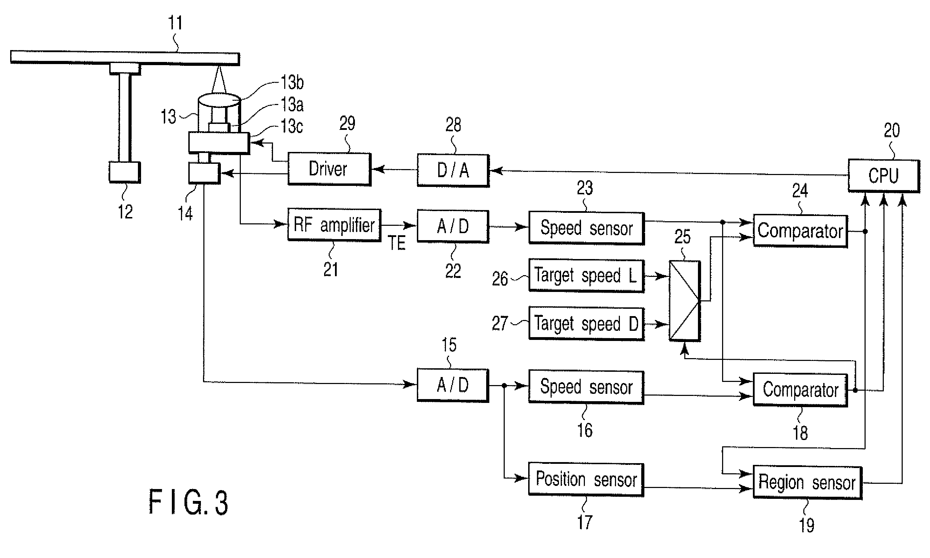

FIG. 3 shows an optical device explained in the present embodiment. In FIG. 3, reference numeral 11 denotes an optical disk targeted for judgment. This optical disk 11 is rotationally driven by a spindle motor 12.

In addition, an optical pickup 13 is installed to be opposed to a face of the optical disk 11. This optical pickup 13 includes: a light source 13a; an objective lens 13b which focuses a laser beam emitted from the light source 13a onto the face of the optical disk 11; and a tracking actuator 13c for controlling a position of the objective lens 13b in a radial direction of the optical disk 11.

The above described light source 13a can selectively emit a blue light based laser beam and a red light based laser beam. In this case, the light source 13a is controlled so as to emit a blue light based laser beam when the mounted optical disk 11 is an HD DVD and emit a red light based laser beam when the mounted optical disk 11 is a DVD, as a result of judgment described later.

In addition, this optical pickup 13 is movable in a tracking direction of the optical disk 11 by a feed motor 14. This feed motor 14 outputs a signal which corresponds to its rotation speed and its signal is digitized by an A/D (analog/digital) converter section 15. Then, the digitized signal is supplied to a speed sensor section 16 and a position sensor section 17.

Among them, the speed sensor section 16 senses an absolute movement speed of the optical pickup 13 based on an input signal, and outputs the sensed speed to a comparator section 18. In addition, the position sensor section 17 measures a movement quantity of the optical pickup 13 based on an input signal, senses its position, and outputs the sensed position to a region sensor section 19. An initial position of the optical pickup 13 is allocated by a central processing unit (CPU) 20.

This region sensor section 19 improves reliability of sensing a boundary by sensing a position of the optical pickup 13, the position being obtained by the position sensor section 17 when the optical pickup 13 crosses over a boundary between the lead-in region and the data region of the optical disk 11.

On the other hand, a signal outputted from the optical pickup 13 is supplied to a radio frequency (RF) amplifier 21, and an RF signal and a variety of error signals are generated. Among them, a tracking error signal TE is digitized by an A/D converter section 22, and the digitized signal is supplied to a speed sensor section 23. This speed sensor section 23 senses a relative movement speed relative to the optical disk 11 of the optical pickup 13 based on an interval of tracking error signals, and outputs the sensed speed to the comparator sections 18 and 24.

Then, the comparator section 18 detects a change of a relative movement speed on the basis of an absolute movement speed, and controls a selector 25 based on its detection result. This selector 25 selectively supplies to the above-described comparator section 24 a target speed L for a lead-in region stored in a storage section 26 by the CPU 20 and a target speed D for a data region stored in a storage section 27 by the CPU 20.

This comparator section 24 compares a relative movement speed with the target speed L or D selected by the selector 25, and outputs its difference component to the CPU 20. Then, the CPU 20 generates a control signal relevant to a tracking actuator 13c and the feed motor 14 based on a comparison result of the comparator section 24.

This control signal is converted to an analog signal by a digital/analog (D/A) converter section 28; the analog signal is supplied to the tracking actuator 13c and the feed motor 14 via a driver 29; and the supplied signal is provided for controlling the actuator and feed motor.

In addition, the CPU 20 sets target speeds L and D with respect to the storage sections 26 and 27 and sets an initial position of the optical pickup 13 with respect to the position sensor section 17. Further, the CPU 20 carries out judgment of the optical disk 11 based on a comparison result of the comparator section 18 and a sensing result of the region sensor section 19.

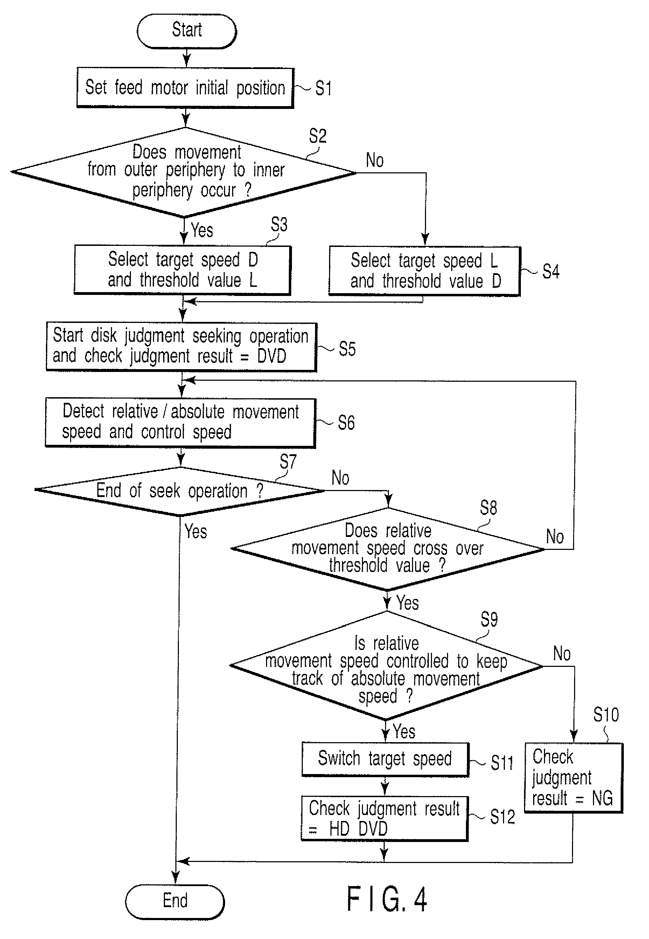

FIG. 4 is a flow chart showing a main processing operation of the above described optical disk device. This processing operation is started after the optical disk 11 has been mounted and a loading process and a focus servo process have been completed.

First, in step S1, the CPU 20 moves the optical pickup 13 to an initial position at the inner periphery side or outer periphery side of the optical disk 11 by using the feed motor 14 in order to carry out judgment of the optical disk 11 by a seek operation.

Next, in step S2, the CPU 20 checks a seeking direction and determines whether to move the optical pickup 13 from the outer periphery side to the inner periphery side of the optical disk 11 or to move the disk from the inner periphery side to the outer periphery side.

In the case where the optical pickup 13 is moved from the outer periphery side to the inner periphery side of the optical disk 11, in step S3, the CPU 20 controls the selector 25 so as to impart a target speed D for a data region stored in the storage section 27 to the comparator section 24, and sets in the vicinity of the target speed L a threshold value which becomes a condition for switching the target speed from D to L.

In the case where the optical pickup 13 is moved from the inner periphery side to the outer periphery side of the optical disk 11, in step S4, the CPU 20 controls the selector 25 so as to impart a target speed L for a lead-in region stored in the storage section 26 to the comparator section 24, and sets in the vicinity of the target speed D a threshold value which becomes a condition for switching the target speed from L to D.

After step S3 or step S4, in step S5, the CPU 20 starts disk judgment using a seek operation and selects a DVD as an initial value of a judgment result.

Then, in step S6, an absolute movement speed of the optical pickup 13 is sensed by the speed sensor section 16 and a relative movement speed of the optical pickup 13 is sensed by the speed sensor section 23. In addition, the CPU 20 controls the movement speed of the optical pickup 13 so as to keep track of the target speed D or L.

Then, in step S7, the CPU 20 checks whether or not the seek operation has terminated. In the case where the check result is affirmative, a judging operation of the optical disk 11 is terminated.

In the case where the check result is negative, in step S8, the CPU 20 judges whether or not the relative movement speed of the optical pickup 13 has crossed over the threshold value set in step S3 or step S4. In the case where the judgment result is negative, the processing is reverted to step S6.

On the other hand, in the case where the judgment result is affirmative, in step S9, the CPU 20 judges whether or not the absolute movement speed and the relative movement speed are subjected to a tracking control. In the case where the judgment result is negative, in step S10, the CPU 20 indicates that the judgment has failed while the judgment result is NG, and terminates the judging operation of the optical disk 11.

In the case where the judgment result is affirmative, in step S11, the CPU 20 controls the selector 25 so as to switch the target speed between D and L. Namely, in the case where the movement occurs from the outer periphery side to the inner periphery side, the target speed is switched from D to L. Conversely, in the case where the movement occurs from the inner periphery side to the outer periphery side, the target speed is switched from L to D.

Then, in step S12, the CPU 20 terminates the judging operation of the optical disk 11 while the judgment result is an HD DVD.

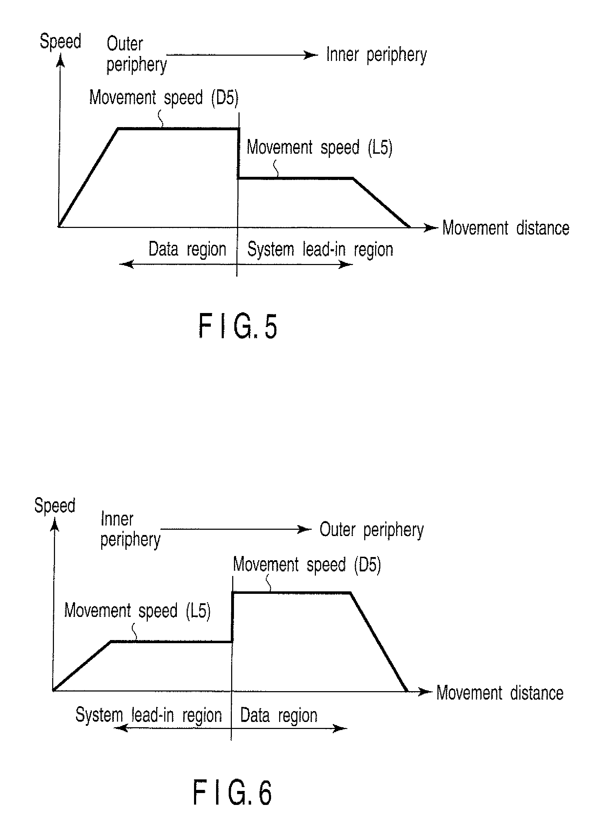

FIGS. 5 and 6 each show the relative movement speed of the optical pickup 13 in the case where an HD DVD has been mounted. FIG. 5 shows a relative movement speed in the case where the optical pickup 13 has moved from the outer periphery side to the inner periphery side of the optical disk 11. FIG. 6 shows a relative movement speed in the case where the optical pickup 13 has moved from the inner periphery side to the outer periphery side of the optical disk 11.

That is, in the case where movement of the optical pickup 13 has been made at a constant speed by a seek operation, a movement speed D5 is detected in a data region when movement is made from the outer periphery side to the inner periphery side of the optical disk 11.

Then, when the movement in the data region terminates and goes to a system lead-in region, a movement speed L5 is detected. This is because, as shown in FIG. 2, track pitches are different from each other between the HD DVD system lead-in region and data region. Namely, in the case where movement of the optical pickup 13 has been made at a constant speed, the data region is shorter than the system lead-in region in terms of an interval at which a tracking error signal TE occurs.

Similarly, when the optical pickup 13 is moved from the inner periphery side to the outer periphery side of the optical disk 11, the movement speed L5 is detected in the system lead-in region, and movement in the system lead-in region terminates. When the movement goes to the data region, the movement speed D5 is detected.

In this way, during one seek operation, in the case where two types of movement speeds D and L have been detected, the judgment result is an HD DVD. In this case, the CPU 20 controls the light source 13a of the optical pickup 13 to emit a blue light based laser beam.

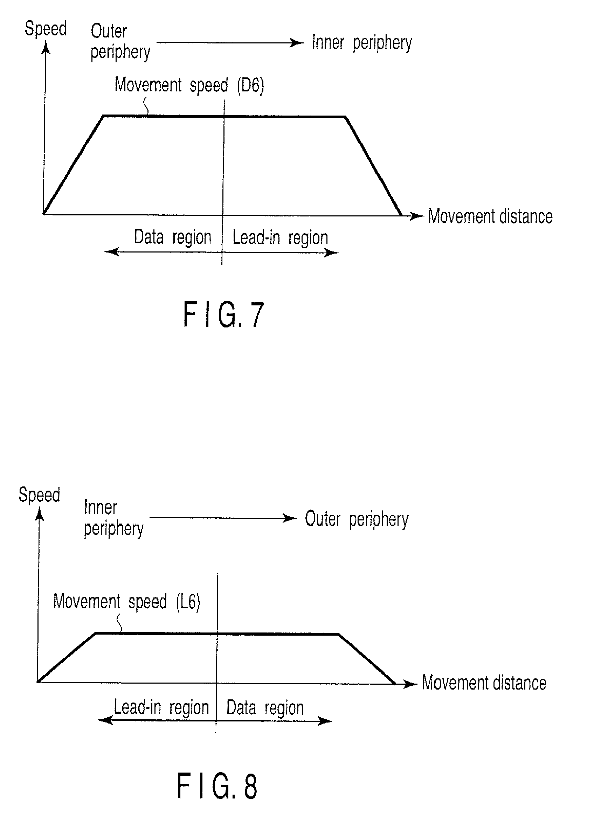

FIGS. 7 and 8 each show a relative movement speed of the optical pickup 13 in the case where a DVD has been mounted. FIG. 7 shows a relative movement speed in the case where the optical pickup 13 has moved from the outer periphery side to the inner periphery side of the optical disk 11. FIG. 8 shows a relative movement speed in the case where the optical pickup 13 has moved from the inner periphery side to the outer periphery side of the optical disk 11.

That is, in the case where the movement of the optical pickup 13 has been made at a constant speed by a seek operation, a movement speed D6 is detected in a data region when movement is made from the outer periphery side to the inner periphery side of the optical disk 11.

When movement in the data region terminates and goes to the lead-in region, the same movement speed D6 is detected. This is because, as shown in FIG. 2, the DVD lead-in region and data region are identical to each other in track pitches. Namely, in the case where the movement of the optical pickup 13 has been made at a constant speed, an interval at which a tracking error signal TE occurs is identical to between read-in region and data region.

Similarly, if the optical pickup 13 is moved from the inner periphery side to the outer periphery side of the optical disk 11, a movement speed L6 is detected in the lead-in region. Then, even if movement in the lead-in region terminates and goes to the data region, the same movement speed L6 is detected.

In this way, during one seek operation, in the case where only one type of movement speed has been detected, the judgment result is a DVD. In this case, the CPU 20 controls the light source 13a of the optical pickup 13 to emit a red light based laser beam.

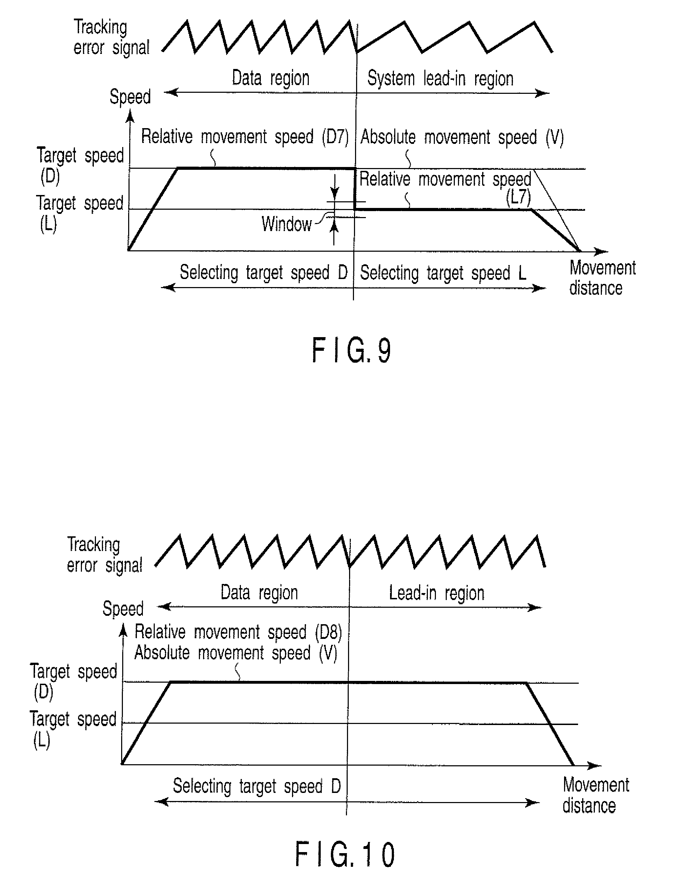

FIG. 9 comparatively shows a relative movement speed and an absolute movement speed of the optical pickup 13 in the case where an HD DVD has been mounted. FIG. 9 assumes that the relative movement speed and the absolute movement speed can indicate the same speed.

The objective lens 13b which focuses a laser beam is moved vertically with respect to the optical disk 11 to adjust a focus to a recording layer. When the optical pickup 13 is moved in parallel to the optical disk 11 in this state, a tracking error signal TE is generated from the RF amplifier 21 every time the optical pickup crosses over a track.

The CPU 20 makes speed control so as to keep track of a target speed based on a relative movement speed of the optical pickup 13 which is measured by the speed sensor section 23 by monitoring an interval at which a tracking error signal TE is generated. In the case where the movement of the optical pickup 13 has been made at a constant speed, in the case where the movement has been made from the system lead-in region to the data region, or, in contrast, in the case where the movement has been made from the data region to the lead-in region, an output timing of a tracking error signal TE is detected as a different value in respective regions, as is evident from FIG. 2.

At this time, the relative movement speed becomes system lead-in region < data region, as shown in FIGS. 5 and 6. In order to control the optical pickup 13 to enable movement at a constant speed, a target speed is prepared for each of the lead-in region and the data region.

In the case where the movement to the system lead-in region is made while the data region is defined as a start point, a relative movement speed D7 can be obtained by selecting a target speed D for the data region and making speed control. If the movement to the system lead-in region occurs while the movement is made in track of this target speed D, the relative movement speed rapidly decreases, and L7 can be obtained.

At this time, if the relative movement speed L7 is in the vicinity of the target speed L for the system lead-in region, a comparison between the absolute movement speed and the relative movement speed is made. This is because it is difficult to move the optical pickup 13 at a constant speed during actual operation. Therefore, while the absolute movement speed obtained from the rotation speed of the feed motor 14 is defined as a reference speed, when the relative movement speed is out of the reference speed, it is judged that the optical pickup has crossed over a region.

Thus, if an absolute movement speed V and a relative movement speed V7 are not tracked, the target speed is switched to that for the system lead-in region. Then, control is made to keep track of a target speed L for the system lead-in region, and a relative movement speed L7 can be obtained. The actual movement speed V of the optical pickup 13 becomes equal to the same value as that set before switching the target speed. If a standard for switching the target speed has not been met, the target speed is used as that for a data region.

Similarly, in the case where the movement to the data region occurs while the system lead-in region is defined as a start point, the relative movement speed L7 can be obtained by selecting a target speed L for the system lead-in region and making speed control. If the movement to the data region occurs while the movement is made in track of this target speed L, the relative movement speed rapidly increases, and D7 can be obtained.

At this time, if the relative movement speed D7 is in the vicinity of the target speed D for the data region and the absolute movement speed and the relative movement speed are not tracked, the target speed is switched to that for the data region. Then, control is made so as to keep track of the target speed D for the data region, and the relative movement speed D7 can be obtained. The actual movement speed V of the optical pickup 13 is obtained as a value equal to that set before switching the target speed. If a standard for switching the target speed has not been met, the target speed of the system lead-in region is used.

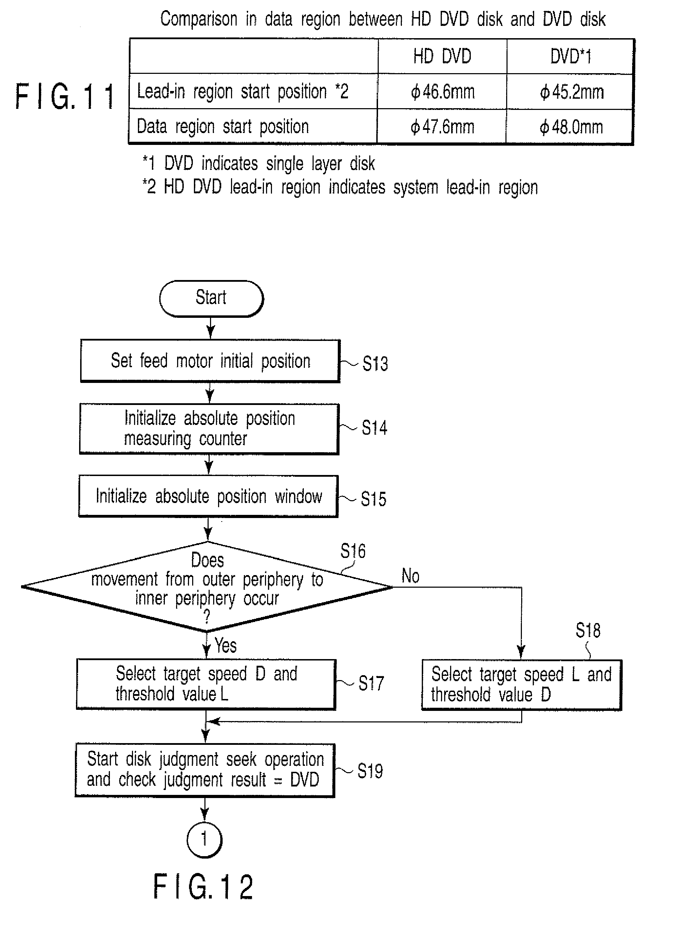

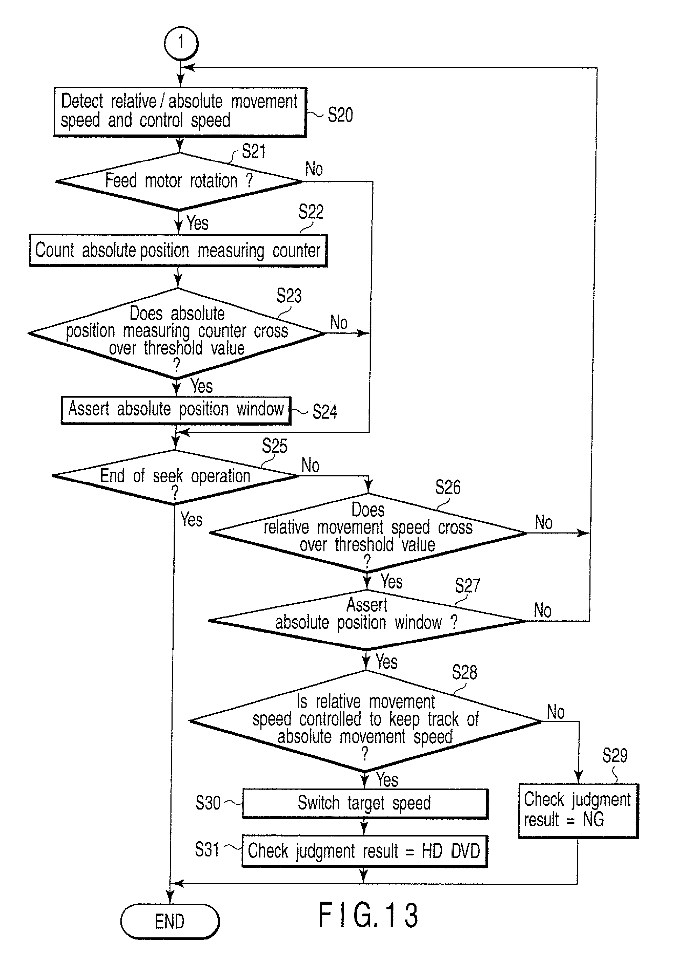

When the region has been crossed over, a judgment of whether the relative movement speed is in the vicinity of the target speed of a switching destination is achieved by providing a window having a width of several % with respect to the target speed and switching the target speed when a change has occurred such that the threshold value is crossed over. This value can be set by the CPU 20. In order to prevent a malfunction when the relative movement speed has changed despite the fact that no region is crossed over, as shown in FIGS. 12 and 13, a switching timing can be determined as a time when a change has occurred within a range specified at an absolute position.

In an HD DVD, when movement is made from the system lead-in region to the data region or from the data region to the system lead-in region, a connection region is crossed over. While movement occurs in the connection region, a tracking error signal cannot be occasionally obtained. Thus, in the case where a relative movement speed or less assumed when movement occurs in the system lead-in region has been detected, processing for keeping a speed constantly at a currently used target speed is carried out, thereby making it possible to restrict rapid speed control in the connection region.

FIG. 10 comparatively shows a relative movement speed and an absolute movement speed of the optical pickup 13 in the case where a DVD has been mounted. That is, when movement of the optical pickup 13 has been made at a constant speed, i.e., in the case where movement has been made from the lead-in region to the data region or from the data region to the lead-in region, the same output timing of a tracking error signal TE is detected in the respective regions, as is evident from FIG. 2. At this time, the relative movement speed becomes lead-in region = data region, as shown in FIGS. 7 and 8.

In the case where movement to the lead-in region is made while the data area is defined as a start point, a relative movement speed D8 can be obtained by selecting a target speed D for the data region and making speed control. Even if the movement to the lead-in region occurs while movement is made in track of the target speed D, the relative movement speed D8 does not change. Thus, the target speed is used as that for the data region.

Similarly, in the case where movement to the data region is made while the lead-in region is defined as a start point, a relative movement speed L8 can be obtained by selecting the target speed L for the lead-in region and making speed control. Even if the movement to the data region occurs while movement is made in track of the target speed L, the relative movement speed L8 does not change. Thus, the target speed is used as that for the lead-in region.

FIG. 11 comparatively shows a data region of an HD DVD and a data region of a DVD. In the case where the movement quantity of the optical pickup 13 can be measured by the feed motor 14, it is possible to enhance the precision of a switching timing of the target speed shown in FIG. 9.

Although the HD DVD is different from the DVD in the range of the lead-in region, there exists a range in which the mutual regions overlap each other. Thus, it is possible to enhance reliability of a timing of changing from the absolute position to the relative movement speed of the optical pickup 13. Control considering a movement position of the optical pickup 13 will be described below with reference to FIGS. 12 to 14.

FIGS. 12 and 13 each are a flow chart showing a main processing operation of the optical disk device considering the movement position of the optical pickup 13. This processing operation is started after the optical disk 11 has been mounted and the loading process and focus servo processing have terminated.

First, in step S13, the CPU 20 moves the optical pickup 13 to an initial position of the inner periphery side or outer periphery side of the optical disk 11 by using the feed motor 14 in order to carry out judgment of the optical disk 11 by a seek operation.

Then, in step S14, the CPU 20 initializes an absolute position measuring counter which exists in the position sensor section 17. Then, the CPU 20 initializes a window having a width of several % with respect to an absolute position.

Next, in step S16, the CPU 20 checks a seeking direction and determines whether the optical pickup 13 is moved from the outer periphery side to the inner periphery side of the optical disk 11 or moved from the inner periphery side to the outer periphery side.

In the case where the optical pickup 13 is moved from the outer periphery side to the inner periphery of the optical disk 11, in step S17, the CPU 20 controls the selector 25 so as to impart to the comparator section 24 the target speed D for a data region stored in the storage section 27, and sets in the vicinity of the target speed L the threshold value which becomes a condition for switching the target speed from D to L.

In addition, in the case where the optical pickup 13 is moved from the inner periphery side to the outer periphery side of the optical disk 11, in step S18, the CPU 20 controls the selector 25 so as to impart to the comparator 24 the target speed L for the lead-in region stored in the storage section 26, and sets in the vicinity of the target speed D the threshold value which becomes a condition for switching the target speed from L to D.

After step S17 or step S18, in step S19, the CPU 20 starts disk judgment by a seek operation and selects a DVD as an initial value of the judgment result.

Then, in step S20, the speed sensor section 16 senses an absolute movement speed of the optical pickup 13 and the speed sensor section 23 senses a relative movement speed of the optical pickup 13. In addition, the CPU 20 controls the movement speed of the optical pickup 13 so as to keep track of the target speed D or L.

Next, in step S21, the CPU 20 checks whether or not the feed motor 14 has operated. In the case where the check result is affirmative, in step S22, the CPU 20 recognizes that the feed motor 14 has operated, thereby a position of the optical pickup 13 has moved, and counts an absolute position measuring counter.

Then, in step S23, the CPU 20 judges whether or not the threshold value set by the absolute position measuring counter has been crossed over. In the case where the judgment result is affirmative, in step S24, the CPU 20 asserts an absolute position window.

After step S24, in the case where the feed motor 14 does not operate in step S21 or in the case where the threshold value set by the absolute position measuring counter has not been crossed over in step S23, the CPU 20 checks whether or not a seek operation has terminated in step S25. If the check result is affirmative, a judging operation of the optical disk 11 is terminated.

In the case where the seek operation is not terminated, in step S26, the CPU 20 judges whether or not the detected relative movement speed has crossed over the threshold value set in step S17 or step S18. If the judgment result is negative, the CPU 20 is reverted to the processing operation in step S20.

On the other hand, in the case where the relative movement speed crosses over the threshold value, in step S27, the CPU 20 judges whether or not the absolute position window is asserted. In the case where the window is not asserted, the CPU 20 is reverted to the processing operation in step S20.

In the case where the window is asserted, in step S28, the CPU 20 judges whether or not the absolute movement speed and relative movement speed are subjected to tracking control. In the case where tracking control is not made, in step S29, the CPU 20 indicates that judgment has failed while the judgment result is NG, and terminates a judging operation of the optical disk 11.

In the case where tracking control is made, in step S30, the CPU 20 controls the selector 25 so as to switch the target speed between D and L. Namely, in the case where movement is made from the outer periphery side to the inner periphery side, the target speed is switched from D to L. Conversely, in the case where the movement is made from the inner periphery side to the outer periphery, the target speed is switched from L to D.

Then, in step S31, the CPU 20 terminates a judging operation of the optical disk 11 while the judgment result is an HD DVD.

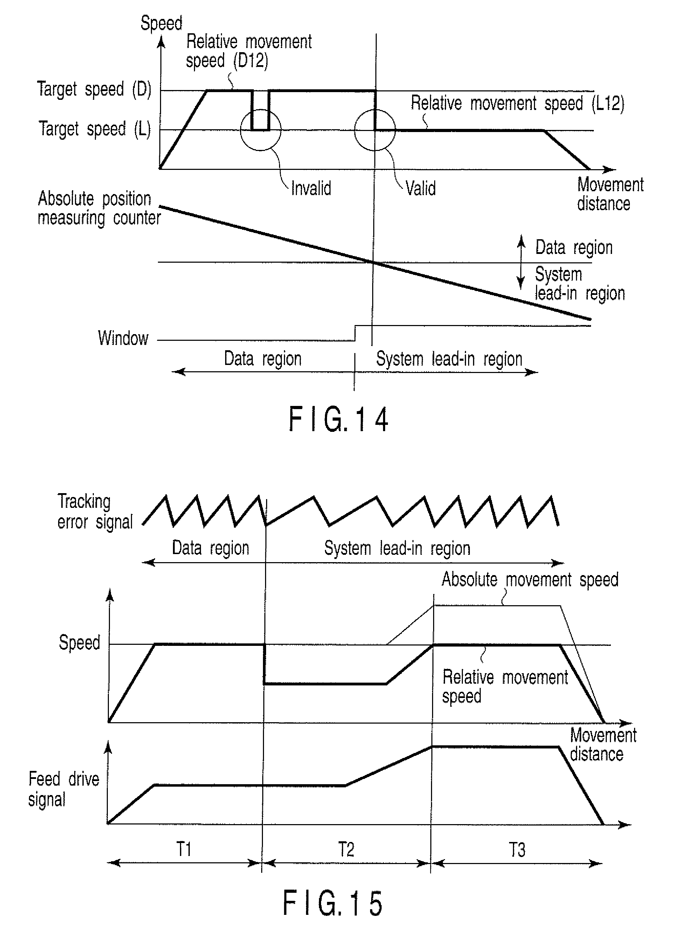

FIG. 14 shows an operation state of each section in the case where the processing operations shown in FIGS. 12 and 13 have been carried out. That is, an absolute position measuring counter which exists in the position sensor section 17 counts a movement quantity from a time at which rotation of the feed motor 14 is started. For example, when the movement to the inner periphery side is made, the movement quantity is counted down, and when the movement to the outer periphery side is made, the movement quantity is counted up. Of course, this counting down and up may be reversed.

A value of this absolute position measuring counter is checked, thereby making it possible to check that the optical pickup 13 exists in either of the data region and the system lead-in region. However, when the optical disk 11 is rotated by using the spindle motor 12, eccentricity occurs due to a displacement between a center of the optical disk 11 and a rotary shaft of the spindle motor 12, making it impossible for the absolute position of the optical pickup 13 to indicate a precise position on the optical disk 11.

Then, a window having a width of several % with respect to a measured absolute position is set as a pseudo absolute position. The width of this window can be set by the CPU 20, and the generated window is asserted before a boundary has been crossed over by the absolute position measuring counter.

The window in the case where the movement is made from the data region to the system lead-in region is asserted during control at a target speed D, and a boundary between the data region and the system lead-in region appears. In the case where the relative movement speed D12 has crossed over the threshold value of switching the target speed while the window is de-asserted for any reason, this speed change becomes invalid.

Then, in the case where the relative movement speed L12 has been sensed such that the threshold value has been crossed over after the window has been asserted, this speed change becomes valid, and the target speed is switched to that for the system lead-in region.

Similarly, in the case where the movement is made from the system lead-in region to the data region, the window is asserted during control at the target speed L. Similarly, the speed movement when the window is not asserted becomes invalid, and the speed change when the window is asserted becomes valid.

In this manner, by using the movement quantity of the feed motor 14, in the case where the relative movement speed has changed irrespective of the fact that the region has not been crossed over for any reason, a malfunction of switching the target speed is restricted, and reliability can be enhanced.

FIG. 15 shows another embodiment of the present invention. That is, assuming that the optical pickup 13 moves from the data region of the HD DVD to the system lead-in region, a feed drive signal which the driver 29 outputs to the feed motor 14 is constant at a period T1 of the data region, and the absolute movement speed and the relative movement speed are constant without any change.

When the optical pickup 13 enters a system lead-in region (period T2), the relative movement speed is lowered. At this time, servo control functions such that the CPU 20 maintains the relative movement speed so as to be equal to the data region, and thus, a feed drive signal increases in magnitude.

In this manner, in a period T3 in which the optical pickup 13 enters the system lead-in region and a predetermined period T2 has elapsed, a feed drive signal becomes larger than that in the period Tl; the relative movement speed becomes equal to that of the data region; and the absolute movement speed becomes faster than that of the data region.

As described above, in the case where a change of a feed drive signal has been detected during one seek operation, the judgment result is an HD DVD. In this case, the CPU 20 controls the light source 13a of the optical pickup 13 to emit a blue light based laser beam.

In addition, in the case of a DVD, even if movement is made from the data region to the lead-in region, no change occurs in relative movement speed, and no change occurs in a feed drive signal. Namely, in the case where a change of a feed drive signal is not detected during one seek operation, the judgment result is a DVD. In this case, the CPU 20 controls the light source 13a of the optical pickup 13 to emit a red light based laser beam.

According to each of the above described embodiments, after the optical disk 11 has been mounted on an optical disk device, judgment of that optical disk 11 can be made within a short time. That is, a track pitch is indirectly measured from a seek operation, whereby the optical disk 11 can be judged before reading out identification information written in the lead-in region. In this manner, a light source or the like can be determined in advance.

Even if a track pitch is directly measured, a precise value cannot be obtained due to eccentricity of the optical disk 11. Then, whether or not a change has occurred in track pitch is measured during a seeking operation instead of directly measuring a track pitch, thereby making it possible to carry out stable judgment irrespective of the precision of the optical disk 11.

In the case where a seek operation control using a movement speed is made, a function according to the present embodiment can be easily incorporated. As an application, in the case where the system lead-in region has been entered while seeking the HD DVD, control for accelerating the optical pickup 13 can be restricted. Further, as an application, an auxiliary operation can be made in the case where the optical pickup 13 is moved to the HD DVD system lead-in region.

The present invention is not limited to the above described embodiment as it is. At the stage of carrying out the invention, the present invention can be embodied by variously modifying constituent elements without departing from the spirit of the invention. In addition, a variety of inventions can be formed by properly combining a plurality of constituent elements disclosed in the above described embodiment. For example, some of the constituent elements may be deleted from all the constituent elements disclosed in the embodiment. For example, the constituent elements according to the different embodiments may be properly combined with each other.

## Claims

1. An optical disk device **characterized by** comprising:
an optical pickup (13) configured to read recording information from an optical disk (11) and selectively emit a blue light based laser beam and a red light based laser beam;
a moving section (14) configured to emit any one of the laser beams from the optical pickup (13) and move the optical pickup (13) to a radial direction of the optical disk (11);
a detector section (16, 18, 23) configured to detect whether or not a track pitch of the optical disk (11) has changed based on a signal (TE) obtained from the optical pickup (13) when the optical pickup (13) is moved in the radial direction of the optical disk (11) by the moving section (14); and
a control section (20) configured to emit a blue light based laser beam from the optical pickup (13) in the case where a change of the track pitch of the optical disk (11) is detected by the detector section (16, 18, 23) and emit a red light based laser beam from the optical pickup (13) in the case where a change of the track pitch of the optical disk (11) is not detected by the detector section (16, 18, 23).

2. An optical disk device according to claim 1, **characterized in that** the detector section (16, 18, 23) comprises:
a signal detector section (21) configured to detect a signal (TE) generated every time a track of the optical disk (11) is crossed over from the optical pickup (13);
a speed detector section (23) configured to detect a relative movement speed of the optical pickup (13) with respect to the optical disk (11) based on a generation interval of the signal (TE) detected by the signal detector section (21); and
a change detector section (18, 20) configured to detect that the track pitch of the optical disk (11) has changed in the case where the relative movement speed detected by the speed detector section (23) has changed and to detect that the track pitch of the optical disk (11) does not change in the case where the relative movement speed detected by the speed detector section (23) has not changed.

3. An optical disk device according to claim 2, **characterized in that** the change detector section (18, 20) is configured to compare an absolute movement speed of the optical pickup (13) with the relative movement speed detected by the speed detector section (23) and to detect whether or not the relative movement speed has changed.

4. An optical disk device according to claim 3, **characterized in that** the detector section (16, 18, 23) comprises:
a setter section (26, 27) configured to set first and second target speeds (D, L) which correspond to first and second regions each having different track pitches of the optical disk (11); and
a control section (20, 24, 25) configured to control a movement speed of the optical pickup (13) so as to be constant by comparing the first target speed (D) with the relative movement speed detected by the speed detector section (23) when the optical pickup (13) moves in the first region of the optical disk (11); and control the movement speed of the optical pickup (13) so as to be constant by comparing the second target speed (L) with the relative movement speed detected by the speed detector section (23) when the optical pickup (13) moves in the second region of the optical disk (11).

5. An optical disk device according to claim 4, **characterized in that** the change detector section (18, 20) is configured to judge that the track pitch of the optical disk (11) has changed when the relative movement speed detected by the speed detector section (23) corresponds to the vicinity of the target speed (D, L) corresponding to a region of a move destination in the case where the optical pickup (13) has moved across the first and second regions of the optical disk (11).

6. An optical disk device according to claim 3,
**characterized in that**
the detector section (16, 18, 23) comprises a position detector section (17) configured to detect a position of the optical pickup (13) with respect to the optical disk (11), and
the change detector section (18, 20) is configured to judge that the track pitch of the optical disk (11) has changed when a position detected by the position detector section (17) corresponds to a change time point of the relative movement speed detected by the speed detector section (23).

7. An optical disk device according to claim 1, **characterized in that** the detector section (16, 18, 23) comprises:
a signal detector section (21) configured to detect a signal (TE) generated every time a track of the optical disk (11) is crossed over from the optical pickup (13);
a speed detector section (23) configured to detect a relative movement speed of the optical pickup (13) with respect to the optical disk (11) based on a generation interval of a signal (TE) detected by the signal detector section (21);
a control section (20) configured to control a movement speed of the optical pickup (13) so that the relative movement speed detected by the speed detector section (23) becomes constant; and
a change detector section (20) configured to detect that a track pitch of the optical disk (11) has changed in the case where a drive signal for controlling a movement speed of the optical pickup (13) has been changed by the control section (20) and to detect that the track pitch of the optical disk (11) has not changed in the case where the drive signal has not changed.

8. An optical disk device control method for controlling an optical disk device comprising an optical pickup (13) configured to read recording information from an optical disk (11) and selectively emit a blue light based laser beam and a red light based laser beam, the method **characterized by** comprising:
a first step (14, S5) of emitting either of the laser beams from the optical pickup (13) and moving the optical pickup (13) in a radial direction of the optical disk (11);
a second step (16, 18, 23, S8) of detecting whether or not a track pitch of the optical disk (11) has changed based on a signal (TE) obtained from the optical pickup (13) when the optical pickup (13) is moved in the radial direction of the optical disk (11) in accordance with the first step (14, S5); and
a third step (20) of emitting a blue light based laser beam from the optical pickup (13) in the case where a change in the track pitch of the optical disk (11) has been detected in the second step (16, 18, 23, S8) and emitting a red light based laser beam from the optical pickup (13) in the case where the change in the track pitch of the optical disk (11) is not detected in the second step (16, 18, 23, S8).

9. An optical disk device control method according to claim 8, **characterized in that** the second step (16, 18, 23, S8) comprises:
a step (21) of detecting a signal (TE) generated every time a track of the optical disk (11) is crossed over from the optical pickup (13);
a step (23) of detecting a relative movement speed of the optical pickup (13) with respect to the optical disk (11) based on a generation interval of a detected signal (TE);
a step (18, 20) of detecting that the track pitch of the optical disk (11) has changed in the case where the detected relative movement speed has changed with respect to an absolute movement speed of the optical pickup (13) and detecting that the track pitch of the optical disk (11) does not change in the case where the relative movement speed detected in the speed detecting step (23) does not change with respect to the absolute movement speed of the optical pickup (13).

10. An optical disk device control method according to claim 8, **characterized in that** the second step (16, 18, 23, S8) comprises:
a step (21) of detecting a signal (TE) generated every time a track of the optical disk (11) is crossed over from the optical pickup (13);
a step (23) of detecting a relative movement speed of the optical pickup (13) with respect to the optical disk (11) based on a generation interval of a detected signal (TE);
a step (20) of controlling a movement speed of the optical pickup (13) so that the detected relative movement speed becomes constant; and
a step (20) of detecting that the track pitch of the optical disk (11) has changed in the case where a drive signal for controlling the movement speed of the optical pickup (13) has changed in the step (20) of controlling the movement speed of the optical pickup (13) and detecting that the track pitch of the optical disk (11) does not change in the case where the drive signal does not change.
